# EUROPEAN PATENT SPECIFICATION

(11) **EP 3 663 358 B1**
(45) Date of publication and mention of the grant of the patent: **29.09.2021**
(21) Application number: 18840917.1
(22) Date of filing: 01.08.2018
(51) Int. Cl.: B29B 9/06, B29C 48/00, C08L 75/08, C08L 75/06, C08L 27/18, C08L 67/02, C08L 77/00, C08K 3/26, C08K 3/34, C08K 3/04, C08K 7/24, C08J 9/12, C08J 9/14, B29C 48/345, B29C 48/40, B29C 48/92, B29C 48/285, B29C 48/36, B29C 48/37, B29B 9/12, B29C 48/625, B29K 75/00, B29K 105/04, B29K 21/00, B29K 77/00

(54) **THERMOPLASTIC POLYMER ELASTOMER MATERIAL WITH MICRO AIR HOLES AND PREPARATION THEREOF**
THERMOPLASTISCHES POLYMERELASTOMERMATERIAL MIT MIKROLUFTLÖCHER UND VORBEREITUNG DAVON
MATÉRIAU ÉLASTOMÈRE DE POLYMÈRE THERMOPLASTIQUE AVEC MICRO-TROUS D'AIR ET SA PRÉPARATION

(30) Priority: 04.08.2017 CN 201710660205
(43) Date of publication of application: 10.06.2020
(73) Proprietor: Nantong De New Material Co., Ltd., Jiangsu 226578 (CN)
(72) Inventor: CHEN, Qiaojian, Shanghai 200062 (CN); GUO, Yanglong, Shanghai 200062 (CN)
(74) Representative: Sun, Yiming
(86) International application number: PCT/CN2018/098024
(87) International publication number: WO 2019/024868

(56) References cited:
- WO-A1-2016/030026
- CN-A- 101 802 062
- CN-A- 103 804 890
- CN-A- 104 364 304
- CN-A- 105 218 851
- CN-A- 106 084 447
- CN-A- 106 084 447
- CN-A- 106 084 448
- CN-A- 106 280 046
- CN-A- 107 298 847
- CN-A- 107 298 848
- CN-A- 107 446 343
- CN-A- 107 722 602
- US-A1- 2007 112 082
- US-A1- 2016 244 587

## Description

### TECHNICAL FIELD

The disclosure relates to the field of preparation of macromolecular materials, and in particular to a thermoplastic polymer elastomer material with micro air holes and preparation thereof.

### DESCRIPTION OF RELATED ART

Thermoplastic polymer elastomer materials are widely applied to manufacture of production and living facilities, equipment, tools and consumables. More requirements are imposed on environmental protection, energy consumption and consumption reduction along with social development. Needs on light materials are also becoming ever more urgent. Weight-lightening of the thermoplastic polymer elastomer materials are also massively experimented and verified, and promotion and application of light materials proceed continuously, for example, polypropylene (PP) foam, polyethylene (PE) foam, polystyrene (PS) foam, polyester (PET) foam, polyamide (PA) foam and polyurethane (TPU) foam.

Currently, common expansion processes of thermoplastic polymer elastomer include expansion and foaming in a pouring mold, expansion and foaming by injection molding, expansion and foaming by extrusion molding, and expansion and foaming in a high-pressure reactor. In poor foaming uniformity and factor, foaming by injection molding is disadvantaged; materials produced by extrusion appear to have a melt breakage fault that can cause breakdown to bubble holes and collapse of the surface; and foaming in the high pressure reactor is relatively highly risky and weak in production capacity and performance. By foaming principle, foaming can be classified into physical foaming and chemical foaming. No matter which kind of polymer raw materials is used and which foaming method is adopted, the foaming process generally includes stages of foaming of bubble cores, foaming of bubble cores, and curing and finalization of foam.

WO 2016/030026 A1 discloses a method for producing expanded polymer pellets, which comprises the following steps: melting a polymer comprising a polyamide; adding at least one blowing agent; expanding the melt through at least one die for producing an expanded polymer; and pelletizing the expanded polymer. The invention further concerns polymer pellets produced with the method as well as their use, e.g. for the production of cushioning elements for sports apparel, such as for producing soles or parts of soles of sports shoes. A further aspect of the invention concerns a method for the manufacture of molded components, comprising loading pellets of an expanded polymer material into a mold, and connecting the pellets by providing heat energy, wherein the expanded polymer material of the pellets or beads comprises a chain extender. The molded components may be used in broad ranges of application.

CN 106 084 447 A discloses a thermoplastic polymer composition foam open-pore material and a preparation method thereof. More particularly, it relates to the thermoplastic polymer composition foam open-pore material obtained by processing a thermoplastic polymer composition with a supercritical technology.

US 2007/112082 A1 discloses moldable-foam moldings whose density is in the range from 8 to 200 g/l, obtainable via fusion of prefoamed foam beads composed of expandable pelletized filled thermoplastic polymer materials, and a process for preparing the expandable pelletized polymer materials.

After foaming and expansion, the thermoplastic polymer elastomer material still needs to maintain good physical properties, which requires design of the expanded material structure and bubble holes in the material. However, limited by various factors such as the structure and properties of the material itself and the understanding of the processing method and foaming principle, existing products like foam particles are generally prepared using a single polymer raw material and a foaming agent through an expansion process. In this way, the foam particles obtained with a solid structure that does not collapse have a pure, closed-hole structure with a continuous outer surface. The foam particles of such a bubble hole structure have a relatively high support power, but the inner air cannot be eliminated when the foam particles are pushed due to the continuous outer surface so that the foam particles have a relatively hard hand feeling. Moreover, the foam particles of such closed bubble hole structure basically fail to realize forward feedback when pressed, and therefore tend to slip when used in shoes. In addition, domestic and overseas approaches of control over the expanded thermoplastic polymer elastomer material are simple and unstable, so that stable and controllable expansion solutions for improving the properties and processing methods of materials, in particular, nylon, PET, PPT and thermoplastic polyurethane, are hardly available.

### BRIEF SUMMARY OF THE INVENTION

The objective of the disclosure is to provide a thermoplastic polymer elastomer material with micro air holes and a preparation method thereof to overcome defects in the prior art.

The objective of the disclosure can be achieved by the following technical solution:
One objective of the disclosure is to provide a thermoplastic polymer elastomer material with micro air holes, including the following ingredients in percentage by weight: 0.1-97% of support polymer material, 0.1-97% of pressure-resistant slow-rebound polymer material, 0.01-0.5% of nucleator and 0.1-10% of foaming agent; the support polymer material is a polymer material with a high molecular weight, high hardness, high crystallization or high polarity, and the pressure-resistant slow-rebound polymer material is a polymer material with a low molecular weight, low hardness, crystallization as low as to amorphous state and polarity as low as to no polarity, corresponding to the support polymer material; the support polymer material is macromolecular weight polyurethane, and the corresponding pressure-resistant slow-rebound polymer material is low-molecular weight polyurethane; or the support polymer material is high-hardness thermoplastic polymer elastomer (TPU, TPE, or rubber, etc. selected upon actual situations), and the corresponding pressure-resistant slow-rebound polymer material is low-hardness thermoplastic polymer elastomer; or the support polymer material is polyamide or polyester, and the corresponding pressure-resistant slow-rebound polymer material is thermoplastic polyurethane wherein the molecular weight Mw of the macromolecular weight polyurethane is 8×10⁴∼5×10⁵, and the molecular weight Mw of the low-molecular weight polyurethane is 2×10⁴∼2.5∼10⁵; the shore hardness of the high-hardness thermoplastic polymer elastomer is in a range of 80A to 75D, and the shore hardness of the low-hardness thermoplastic polymer elastomer is in a range of 30∼85A; the polyester or polyamide is modified low-melting-point polyester or modified low-melting-point polyamide, and the difference between the melting points of the support polymer material and the pressure-resistant rebound polymer material is controlled to be within 20°C. In such circumstance, the high-hardness thermoplastic polymer elastomer and the low-hardness thermoplastic polymer elastomer are generally the same substance.

More preferably, the modified low-melting-point polyester may be modified PET, PTT, or PBT, and the modified low-melting-point polyamide may be modified low-melting-point PA6, PA6I, PA11, PA12, or PA9. (A main reason of selecting the modified low-melting-point polyamide or the modified low-melting-point polyester is that the melting point of common polyester or polyamide is far higher than that of the polyurethane, which results in difficulties in adjustment to an appropriate processing temperature when the modified low-melting-point polyamide or the modified low-melting-point polyester and the polyurethane are used as raw materials to prepare foam products, and therefore problems such as over melting or insufficient mixing of some raw materials tend to arise.)

As a preferable implementation solution, the nucleator is selected from at least any one of carbon nano-tube, silicon dioxide, talcum powder, modified calcium carbonate, carbon black and tetrafluoroethylene powder;
and the foaming agent is selected from at least any one of CO₂, N₂, normal butane, n-pentane and isopentane.

As a preferable solution, the particle size of the polymer elastomer material is in a range of 0.6 to 25 mm.

On the basis of the basic formula, the thermoplastic polymer elastomer material with micro air holes of the disclosure can be selectively added with other functional auxiliaries such as light stabilizers and antioxidants according to required material properties.

The thermoplastic polymer elastomer material with micro air holes, as one of the objectives, can be prepared with a conventional foaming process (for example, reactor foaming) based on the formula. The other objective of the disclosure is to provide a new method for preparing the thermoplastic polymer elastomer material with micro air holes, including the following steps:
(i) feeding the support polymer material, the pressure-resistant slow-rebound polymer material and the nucleator into a double-screw extruder via a feeding port at the front end, feeding the foaming agent into the double-screw extruder via a feeding port in the middle section, melting and well mixing all raw materials, sending the mixed materials into a static mixer for further homogenization to obtain a hot melt, and delivering the hot melt by a melt pump under a controlled pressure and at a fixed amount;
(ii) guiding the hot melt that is delivered by the melt pump to pass a mold head and enter an underwater granulation chamber to obtain particles, delivering and separating the particles by process water, screening and drying the particles to obtain the target product.

As a preferable implementation solution, in step (i), the temperature of the double-screw extruder is in a range of 160 to 300°C, and the length-diameter ratio of the double-screw extruder is 32-56;
the temperature in the static mixer is set to be in a range of 120 to 280°C; the inlet pressure of the melt pump is in a range of 50 to 200 bar; and the difference between the pressure of the hot melt extruded via the mold head and the pressure of the process water in the underwater granulation chamber is controlled to be in a range of 70 to 120 bar.

As a preferable implementation solution, in step (ii), the process water in the underwater granulation chamber is at a temperature in a range of 10 to 90°C and under a pressure in a range of 4 to 15 bar;
the particles are discharged out of the underwater granulation chamber and then delivered by the process water via a multi-stage pressure-release expansion process water pipeline of which the pressure gradually drops stage by stage.

As a further preferable option of the above preferable implementation solution, in step (ii), the multi-stage pressure-release expansion process water pipeline is a four-stage process water pipeline, wherein the water pressure of a first-stage process water pipe keeps consistent with the process water pressure in the underwater granulation chamber. More preferably, the water pressure is 4-15 bar in the first-stage process water pipe, 3-10 bar in a second-stage process water pipe, 2-6 bar in a third-stage process water pipe, and 1-4 bar in a fourth-stage process water pipe.

According to a more specific preparation method, the double-screw extruder is driven by a motor to rotate at a speed in a range of 50 to 900rpm; a screw barrel of the extruder is preferably set at a temperature in a range of 160 to 300°C to ensure that the thermoplastic polymer can be fully melted; the polymer and the nucleator are added via a screw feeding port at the front end, and the foaming agent is added via a screw feeding port in the middle section. The mixed materials are heated by the extruder and sheared by screws, so that all materials are melted and well mixed by the screws to generate a melt which subsequently enters the static mixer. The melt is further homogenized and cooled in the static mixer to ensure that the melt temperature is in a range of 120 to 280°C. The temperature can be controlled upon requirements for physical properties of the finished product. Through the pressure control and fixed-amount delivery functions of the melt pump, the inlet pressure of the melt pump is set to be in a range of 50 to 200 bar to control the melt pressure in a screw cavity of the extruder to keep stable, so that the hot melt, the nucleator and the foaming agent can be well mixed and homogenized in a controllable high-pressure environment. The high-pressure hot melt is steadily pushed into the mold head of the extruder through the pressure control and fixed-amount delivery functions of the melt pump, wherein the mold heat is of a porous plate structure with a uniform heating facility inside to ensure that the hot melt can steadily pass the mold head. The hot melt delivered by the melt pump at a high pressure passes orifices of the mold head, and then is granulated into soybean-shaped particles by a granulation cutter which is rotating at a high speed in the underwater granulation chamber, wherein the granulation cutter of the underwater granulation chamber actually granulates hot melt under water. Preferably, the process water at a temperature in a range of 10 to 90 °C generates a pressure in a range of 4 to 15 bar by the effect of a process water pump, and enters the underwater granulation chamber via a process water inlet pipe of the underwater granulation chamber. In this way, the high-pressure hot melt is quickly cooled by the high-pressure process water and granulated into particles by the granulation cutter. The high-pressure hot melt and the high-pressure process water generate a differential pressure which can be regulated according to the inlet pressure of the melt pump and the pressure of a variable frequency process water pump, so that the initial expansion rate and factor of the polymer particles are under control and keep stable in the whole process. Since the cooling time of the just granulated polymer particles is short and the material crystallization speed varies a lot in different formulas, the disclosure specially preferably adopts a multi-stage pressure-release expansion process water pipeline. Based on the principle that the strength and the pressure bearing conditions increase as the outer surfaces of the polymer particles stay in process water for a longer time (the length of the retention time can be controlled by setting the length of the pipeline), the pressure is still maintained in a range of 4 to 15 bar in the first-stage process water pipe, and in such circumstance, the melt particles are partly cooled and initially expand under a differential pressure. In the second-stage process water pipe, the water pressure is lowered to 3-10 bar through increasing the pipeline diameter and shortening the pipeline. In such circumstance, the melt particles are further cooled, and the strength of the outer surfaces increases, but expansion occurs again after the differential pressure increases. In the third-stage process water pipe, the pipe resistance is lowered through increasing the pipe diameter and shortening the pipe to reduce the water pressure to 2-6 bar. In such circumstance, the melt particles are further cooled, and the strength of the outer surfaces increases, but expansion occurs again after the differential pressure increases. However, the expansion rate drops to a very low level because particle crystallization is about to be completed. In the fourth-stage process water pipe, the pipe resistance is lowered through regulating the pipe diameter and length to reduce the water pressure to 1-4 bar. In such circumstance, the melt particles are continuously cooled, and the strength of the outer surfaces further increases, but expansion occurs again after the differential pressure increases. However, due to sufficient cooling time, very high the strength of the outer surfaces of the particles, and basically completed particle crystallization, the outer diameters of the particles are firmly finalized. The expanded polymer particles and water jointly enter a centrifugal separator. The water and the expanded polymer particles are separated in the separator. The expanded particles enter a vibrating screen and then a post-treatment system, and the process water flows out of the centrifugal separator and then flows into a process water tank. The above procedures are repeated so that the process proceeds continuously. In the disclosure, the reason of adopting the multi-stage pressure-release expansion process water pipeline of which the pressure gradually drops stage by stage is to provide an appropriate, controllable and stable pressure-release expansion environment for particles which enter the underwater granulation chamber via the mold head, thus aiding the subsequent foaming and molding of the particles, ensuring controllable and stable foaming and expansion factor, and avoiding problems such as breakdown tendency of bubbles holes of particles, collapse of foam and molding failure or uncontrollable foaming factor in the conventional pressure-release expansion environment.

In the disclosure, the macromolecular weight, low molecular weight, etc. of combinations such as macromolecular weight polymer and low-molecular weight polymer, high-hardness polymer and low-hardness polymer, high-crystallization polymer and polymer with crystallization as low as to amorphous state, high-polarity polymer and low- or no-polarity polymer (preferably the combinations are the same kind or same type of polymer material) are distinguished through comparison, which means that between two kinds of polymer raw materials which are different in physical properties, the material with a higher molecular weight is defined as the macromolecular weight polymer, and the material with a lower molecular weight is defined as the low-molecular weight polymer. Likely, high hardness and low hardness as well as others are also defined in the similar way. More preferably, the molecular weight of the macromolecular weight polymer is at least one time greater than that of the low-molecular weight polymer; and the hardness of the high-hardness polymer is over 10A greater than that of the low-hardness polymer.

In the disclosure, the pressure-resistant rebound polymer material which mainly plays a rebound role should be selected from elastomer materials such as TPU, rubber and TPE; and the support polymer material which mainly plays a support role may be an elastomer type polymer material or a non-elastomer material, for example, PET, PTT, etc.

All raw materials and process steps involved in the disclosure, unless otherwise specified, may be any raw materials or process technologies known to those skilled in this field. The thermoplastic polyurethane, for example, can be selected directly from commercially available products or prepared by known process technologies. More preferably, the thermoplastic polyurethane can be polyether or polyester type thermoplastic polyurethane according to the product demands.

According to the disclosure, during preparation, the sizes, dimensions and density of inner micro air holes and the forms, dimensions and densities of the inner and surface bubble holes of expanded particles are designed and controlled through selection of raw materials and optimization of formulas; at the same time, the expansion of bubble cores is controlled through the pressure on the polymer hot melt in the screw cavity of the double-screw extruder and the pressure at the moment when the polymer hot melt is extruded out of the extruder; and finally, the expanded material is controlled be cured and finalized through the difference between the melt pressure and the process water pressure and by the method of slow pressure release of the process water.

According to the disclosure, raw materials including combinations of macromolecular weight polymer and low-molecular weight polymer, high-hardness polymer and low-hardness polymer, high-crystallization polymer and polymer with crystallization as low as to amorphous state, high-polarity polymer and low- or no-polarity polymer are designed first; then, the raw materials are mixed and melted and then added with the foaming agent; next, the obtained mixture is treated by an expansion process (preferably by the uncontrollable expansion process designed in this disclosure). The foaming agent has different foaming capabilities in polymer raw materials of different physical properties. The polymer raw material that serves as the support is quickly molded and is low in foaming strength, so that the foaming agent operates in the supporting polymer raw material in a short time and creates a closed hole structure that is shaped to shape the support by extremely micro-closed air holes. The polymer raw material which serves the pressure-resistant slow-rebound elastomer is slowly molded and is high in foaming capability, so that the foaming agent works in a long time in the pressure-resistant slow-rebound polymer raw material and can generate an open hole structure and form the pressure-resistant slow-rebound elastomer. The two different structures, namely the support and the pressure-resistant slow-rebound elastomer, are mixed in the foaming particles to jointly form an open-and-closed hole compound expanded material with a coiled, network-like and cross-linking air channel structure. In the disclosure, the polymer material with a macromolecular weight or high hardness or high crystallization or high polarity and the foaming agent form numerous 0.01-20 µm closed micro air holes by the effect of the nucleator, and the closed micro air holes serve as the support component in the expanded material; the polymer with a low molecular weight or low hardness or low crystallization or low polarity/no polarity and the foaming agent form extremely micro open bubble holes (non-closed holes), which together with some expanded particles form a pressure-resistant slow rebound component; the open bubble holes form air channels that coil the closed micro air holes in the expanded material, and the air channels partly communicate with one another and extend to the surfaces of the expanded particles. In this way, when the expanded material is extruded, the closed micro air holes which serve as the support component are extruded to play the supporting role, while the air in the open bubble holes in the pressure-resistant slow rebound component is quickly discharged out, which endows the expanded material with a good extrusion flexible feeling and higher support stability; when the extrusion force disappears, the closed micro air holes support the expanded material to reset, and outside air is then absorbed into the open bubble holes. The whole material can obtain a better cushion feedback.

Besides, according to the disclosure, in the preparation process, the dimensions and number of micro air holes and the dimensions, shapes and number of the open bubble holes in the expanded material can be controlled to adjust the physical properties of the material to meet various downstream purposes and customer requirements according to the permeability difference of different foaming agents in different polymer materials, the melt strength difference of different materials caused by differential pressures and melt crystallization speed, and the difference of different polymers in changes and retention of physical properties.

According to the disclosure, in the preparation process, when large open holes are required or when the ratio of the open bubble holes is small, the inlet pressure of the melt booster pump can be increased at a constant process water temperature to improve the inlet pressure of the mold head, and the pressure release can be accelerated using the process water pressure. When small open holes are required or when the ratio of the open bubble holes needs to be reduced, the inlet pressure of the melt booster pump can be reduced at a constant process water temperature to indirectly reduce the inlet pressure of the mold head, and pressure release can be slowed down by the pressure of the process water.

Compared with the prior art, the disclosure has the following beneficial effects:
(1) Compared with common expanded materials with closed micro holes that are made from a polymer raw material with a single physical property, the disclosure actually adopts two kinds of polymer raw materials with different physical properties, so that a coiled, network-like and cross-linking air channel structure including proper micro air holes and appropriate open bubble holes is formed in the expansion and foaming process of the two kinds of polymer raw materials. In this way, the micro air hole structure can endow the material with excellent physical properties such as strength, elastic modulus and rebound force, and the open bubble hole structure can enhance the energy absorption and storage properties, contact feeling and comfort feeling of the material. The whole material can provide a better cushion feedback.
(2) Adjustment in the formulas and process conditions can help effectively regulate the structures, densities and dimensions of the micro air holes and the open bubble holes and the opening forms of the open bubble holes, and control the micro air holes and the open bubble holes to respectively account for 20-99.5% and 0.5-80% of the material by volume.
(3) According to the disclosure, in the preparation process, the speed and factor of expansion caused by pressure release can be stabilized by control over the back pressure of the hot melt in the double-screw extruder and the back pressure of the underground granulation chamber, thus meeting the requirement of accurately controlling the expansion factor of the material.
(4) Multi-stage gradual pressure release is adopted to allow flexible control over the bubble breaking rate of different polymers in the expansion process, so that an appropriate expanded compound material can be manufactured.
(5) The particle sizes of the expanded particles are controlled to be in a range of 0.6 to 25 mm by control over the inlet pressure of the melt pump and the dimensions of orifices of the porous plate.
(6) The polymer elastomer material prepared by the disclosure is applicable to fields of expanded materials such as shoe products, packing materials, shock absorption materials, heat insulating materials, tracks, and solid tyres.

### BRIEF DESCRIPTION OF THE SEVERAL VIEWS OF THE DRAWINGS

FIG. 1 is a process flowchart of the disclosure;
FIG. 2-4 are SEM pictures in different scales of the interior of the polymer elastic material with micro air holes prepared by the disclosure;
FIG. 5-8 are SEM pictures in different scales of the surface of the polymer elastic material with micro air holes prepared by the disclosure;

In the drawings, 1-motor; 2-double-screw extruder; 3-feeding port I; 4-feeding port II; 5-static mixer; 6-melt pump; 7- mold head; 8- underwater granulation chamber; 9-process water inlet pipe; 10- first-stage process water pressure release pipe; 11-second-stage process water pressure release pipe; 12- third-stage process water pressure release pipe; 13- fourth-stage process water pressure release pipe; 14-centrifugal separator; 15- vibrating screen; 16- process water pump.

### DETAILED DESCRIPTION OF THE INVENTION

The disclosure is further described in detail in conjunction with the attached drawings and specific embodiment.

Besides, unless otherwise specified, all raw materials are commercially available.

The contents of the disclosure can be more easily understood by referring to the detailed description of the preferable implementation methods and inclusive embodiment of the disclosure below. Unless otherwise specified, all technologies and scientific terms used in this text have meanings that can be generally understood by the ordinarily skilled in the field. If contradictions arise, the definition in the Description shall prevail.

For example, terms "is prepared by" and "comprising" used in this text are synonymous. Terms "including", "comprising", "having" and "containing" or any other modifications used in this text are intended for non-exclusive inclusion. For example, compositions, procedures, methods, products or devices including listed factors are not necessarily limited to the factors, but can include all other unlisted factors, or their inherent factors.

When values, concentrations, or other values or parameters are expressed by a scope, a preferable scope, or a scope defined by a series of upper preferred values and lower preferred values, this should be understood as that all scopes defined by any match of an upper limit in any scope or a preferred value and a lower limit in any scope or a preferred value are specifically disclosed, regardless of whether or not the scopes are individually disclosed. For example, when a scope of 1 to 5 is disclosed, the described scope should be understood to include a scope of "1 to 4", a scope of "1 to 3", a scope of "1 to 2", a scope of "1 to 2 and 4 to 5", a scope of "1 to 3 and 5", etc. When the scope of a numerical value is described in this text, unless otherwise specified, the scope is intended for including end values and all integers and fractions in this scope.

Approximate words used in the Description and the Claims are adjuncts of the quantifier, indicating that the disclosure is not limited to the specific quantity, but also includes acceptable revision portions which approach the quantity, but do not cause changes in the relevant basic functions. Correspondingly, "approximate" and "about" are adjuncts of a numerical value, meaning that the disclosure is not limited to the accurate numerical value. In some cases, approximation words may be corresponding to the accuracy of instruments for measuring the numerical values. In the Description and Claims of the present application, scope definitions can be combined and/or exchanged. Unless otherwise specified, each of those scopes includes all sub-scopes there-between.

In addition, indefinite articles "a" and "an" in front of the factors or ingredients in the disclosure do not limit the quantity of the factors or ingredients. Therefore, "a" and "an" should be understood to include "one" or "at least one", and a singular factor or ingredient also includes the plural form, unless the described number obviously indicates the singular form.

"Polymer" refers to a polymer compound prepared by polymerizing identical or different types of monomers. The general term "polymer" contains terms "homopolymer", "co-polymer", "terpolymer" and "interpolymer".

The disclosure provides a thermoplastic polymer elastomer material with micro air holes, including the following ingredients in percentage by weight: 0.1-97% of support polymer material, 0.1-97% of pressure-resistant slow-rebound polymer material, 0.01-0.5% of nucleator and 0.1-10% of foaming agent.

As a preferable implementation solution, the support polymer material is a polymer material with a high molecular weight, high hardness, high crystallization or high polarity, and the pressure-resistant slow-rebound polymer material is a polymer material with a low molecular weight, low hardness, crystallization as low as to amorphous state and low polarity/no polarity, corresponding to the support polymer material.

As a more preferable option of the above preferable implementation solution, the support polymer material is macromolecular weight polyurethane, and the corresponding pressure-resistant slow-rebound polymer material is low-molecular weight polyurethane;

or the support polymer material is high-hardness thermoplastic polymer elastomer (TPU, TPE, or rubber, etc. selected upon actual situations), and the corresponding pressure-resistant slow-rebound polymer material is low-hardness thermoplastic polymer elastomer;
or the support polymer material is polyamide or polyester, and the corresponding pressure-resistant slow-rebound polymer material is thermoplastic polyurethane.

As a further preferable option of the above more preferable implementation solution, the molecular weight Mw of the macromolecular weight polyurethane is 8×10⁴∼5×10⁵, and the molecular weight Mw of the low-molecular weight polyurethane is 8×10⁴∼5×10⁵,
the shore hardness of the high-hardness thermoplastic polymer elastomer is in a range of 80A to 75 D; the shore hardness of the low-hardness thermoplastic polymer elastomer is in a range of 30 to 85A;
the polyester or polyamide is modified low-melting-point polyester or modified low-melting-point polyamide, and the difference between the melting points of the support polymer material and the pressure-resistant rebound polymer material is controlled to be within 20°C. More preferably, the modified low-melting-point polyester may be modified PET, PTT, or PBT, and the modified low-melting-point polyamide may be modified low-melting-point PA6, PA6I, PA11, PA12, or PA9.

As a preferable implementation solution, the nucleator is selected from at least any one of carbon nano-tube, silicon dioxide, talcum powder, modified calcium carbonate, carbon black and tetrafluoroethylene powder;
and the foaming agent is selected from at least any one of CO₂, N₂, normal butane, n-pentane and isopentane.

As a preferable solution, the particle size of the polymer elastomer material is in a range of 0.6 to 25mm.

Besides, it needs to be noted that the formula disclosed above is merely a basic formula of the disclosure. On the basis of the basic formula disclosed by the disclosure, those skilled in this field can add other conventional auxiliaries into the formula, for example, antioxidants and anti-aging agents which can improve the anti-aging performance of the product.

The disclosure also provides a method for preparing a thermoplastic elastomer material with micro air holes, including the following steps:
(i) feeding the support polymer material, the pressure-resistant slow-rebound polymer material and the nucleator into a double-screw extruder via a feeding port at the front end, feeding the foaming agent into the double-screw extruder via a feeding port in the middle section, melting and well mixing all raw materials, sending the mixed materials into a static mixer for further homogenization to obtain a hot melt, and delivering the hot melt by a melt pump under a controlled pressure and at a fixed amount;
(ii) guiding the hot melt that is delivered by the melt pump to pass a mold head and enter an underwater granulation chamber to obtain particles, delivering and separating the particles by process water, screening and drying the particles to obtain the target product.

As a preferable implementation solution, in step (i) the temperature of the double-screw extruder is in a range of 160 to 300°C, and the length-diameter ratio of the double-screw extruder is 32:56;
the temperature in the static mixer is set to be in a range of 120 to 280°C; the inlet pressure of the melt pump meets the following requirement: the pressure of the hot melt extruded via the mold head and the pressure of the process water in the underwater granulation chamber is in a range of 70 to 120 bar.

As a preferable implementation solution, the process water in the underwater granulation chamber in step (ii) is at a temperature in a range of 10 to 90°C and under a pressure in a range of 4 to 15 bar.

The particles are brought out of the underwater granulation chamber and delivered by the process water via a multi-stage pressure-release expansion process water pipeline of which the pressure gradually drops.

As a further preferable option of the above preferable implementation solution, in step (ii), the multi-stage pressure-release expansion process water pipeline is a four-stage process water pipeline, wherein the water pressure is 4-15 bar in the first-stage process water pipe, 3-10 bar in the second-stage process water pipe, 2-6 bar in the third-stage process water pipe, and 1-4 bar in the fourth-stage process water pipe.

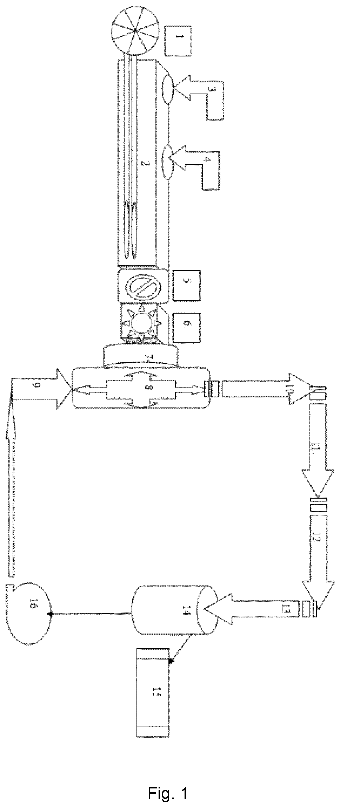

Further preferably, the details of the above preparation process can be seen in FIG. 1, wherein the double-screw extruder 2 is driven by a motor 1 to rotate at a speed in a range of 50 to 900rpm; a screw barrel of the double-screw extruder 2 is preferably set at a temperature in a range of 160 to 300°C to ensure that the thermoplastic polymer can be fully melted; the polymer raw materials and the nucleator are fed via a screw feeding port I 3 at the front end, and the foaming agent is fed via a screw feeding port II 4 in the middle section. The mixed materials are heated and sheared by screws, so that all raw materials are melted and well mixed by the screws to generate a melt which subsequently enters the static mixer. The melt is further homogenized and cooled in the static mixer 5 to ensure that the melt temperature is in a range of 120 to 280°C. The temperature can be controlled upon requirements for physical properties of the finished product. Through the pressure control and fixed-amount delivery functions of the melt pump 6 (a gear pump can be adopted), the inlet pressure of the melt pump 6 is set to be in a range of 50 to 200 bar to control the melt pressure in a screw cavity of the double-screw extruder 2 to keep stable, so that the hot melt, the nucleator and the foaming agent can be well mixed and homogenized in a controllable high-pressure environment. The high-pressure hot melt is steadily pushed into the mold head 7 of the extruder through the pressure control and fixed-amount delivery functions of the melt pump 6, wherein the mold heat 7 is of a porous plate structure with a uniform heating facility inside to ensure that the hot melt can steadily pass the mold head 7. The hot melt delivered by the melt pump 6 at a high pressure passes orifices of the mold head 7, and then is granulated into soybean-shaped particles by a granulation cutter which is rotating at a high speed in the underwater granulation chamber 8, wherein the granulation cutter of the underwater granulation chamber 8 actually granulates hot melt under water. The process water at a temperature in a range of 10 to 90 °C generates a 4-15 bar pressure by the effect of a process water pump assembly 16 (including the water pump, a water tank, etc.), and enters the underwater granulation chamber 8 via a process water inlet pipe 9 of the underwater granulation chamber. In this way, the high-pressure hot melt extruded via the mold head 7 is quickly cooled by the high-pressure process water and is granulated by the granulation cutter. The high-pressure hot melt and the high-pressure process water generate a differential pressure which can be regulated according to the inlet pressure of the melt pump 6 and the pressure output by the process water pump assembly 16, so that the initial expansion rate and factor of the polymer particles are under control and keep stable in the whole process. Since the cooling time of the just granulated polymer particles is short and the material crystallization speed varies a lot in different formulas, the disclosure specially adopts a multi-stage pressure-release expansion process water pipeline (a four-stage pipeline is preferably adopted here). Based on the principle that the strength and the pressure bearing conditions increase as the outer surfaces of the polymer particles stay in process water for a longer time, the pressure is still maintained in a range of 4 to 15 bar in the first-stage process water pipeline (namely the first-stage process water pipe 10), and in such circumstance, the melt particles are partly cooled and initially expand under a differential pressure. In the second-stage process water pipeline (namely the second-stage process water pipe 11), the water pressure is lowered to 3-10 bar through increasing the pipeline diameter and shortening the pipeline. In such circumstance, the melt particles are further cooled, and the strength of the outer surfaces increases, but expansion occurs again after the differential pressure increases. In the third-stage process water pipeline (namely the third-stage process water pipe 12), the pipe resistance is reduced through increasing the pipe diameter and shortening the pipe to lower the water pressure to 2-6 bar. In such circumstance, the melt particles are further cooled, and the strength of the outer surfaces increases, but expansion occurs again after the differential pressure increases. However, the expansion rate drops to a very low level because particle crystallization is about be completed. In the fourth-stage process water pipeline (namely the fourth-stage process water pipe 13), the pipe resistance is reduced by regulating the pipe diameter and length to lower the water pressure to 1-4 bar. In such circumstance, the melt particles are continuously cooled, and the strength of the outer surfaces is enhanced, but expansion occurs again after the differential pressure increases. However, due to sufficient cooling time, the very high strength of the outer surfaces of the particles and basically completed particle crystallization, the outer diameters of the particles are firmly finalized. The expanded polymer particles and water jointly enter a centrifugal separator 14. The water and the expanded polymer particles are separated in the separator. The expanded particles enter a vibrating screen 15 and then a post-treatment system and finally are output as an expanded product, and the process water flows out of the centrifugal separator 14 and then flows into a process water pump assembly 16. The above procedures are repeated so that the process proceeds continuously.

In addition, it needs to be pointed out that, the above preparation method is a preferable process of the disclosure for preparing the compound bubble hole structure with open and closed holes. Besides the above-mentioned preferable process which adopts screws for continuous foaming, the disclosure can also adopt other conventional foaming preparation processes such as reactor foaming on the basis of a basic formula which can generate multiple bubble hole structures, and the finally obtained products also have the compound bubble hole structure with open and closed holes.

In the following embodiment, raw materials used include: polyether type and polyester type thermoplastic polyurethane from Bayer and Huntsman, modified low-melting-point PET and PBT from Sinopec Shanghai Petrochemical Company Limited, and modified low-melting-point polyamide from DuPont and Evonik.

### Embodiment 1

According to the process flow as shown in FIG. 1, a thermoplastic polymer elastomer material with micro air holes of the disclosure was prepared based on the following raw material formula and process conditions:
In this embodiment, the raw materials added in percentage by weight included: 75% of polyether type thermoplastic polyurethane with a molecular weight Mw in a range of 150K to 300K (K means the unit "thousand" here, the same below), 20% of polyether type thermoplastic polyurethane with a molecular weight Mw in a range of 50K to 100K, 4.5% of foaming agent which was CO₂, and 0.5% of nucleator which was calcium carbonate. The length-diameter ratio L/D of the double-screw extruder was 40; the heating temperature of the screws was in a range of 160 to 220°C; the temperature of the static mixer was in a range of 140-180°C; the inlet pressure of the melt pump was in a range of 100 to 120 bar; the process water pressure was about 12 bar; and the difference pressure during pressure release (namely the differential pressure between the high-pressure hot melt at the exit of the mold head and the process water in the underwater granulation chamber) was controlled to be in a range of 90 to 120 bar. In the multi-stage pressure-release expansion process water pipeline, the water pressure was controlled to be about 12 bar in the first-stage process water pipe, about 8 bar in the second-stage process water pipe, about 5 bar in the third-stage process water pipe, and about 2 bar in the fourth-stage process water pipe.

Finally, the thermoplastic polymer elastomer material with micro air holes obtained using the vibrating screen had a particle size in a range of about 1 to 3mm. In the material, the formed micro air hole structure accounted for about 60-80% and the open bubble hole structure accounted for about 10-35% by volume.

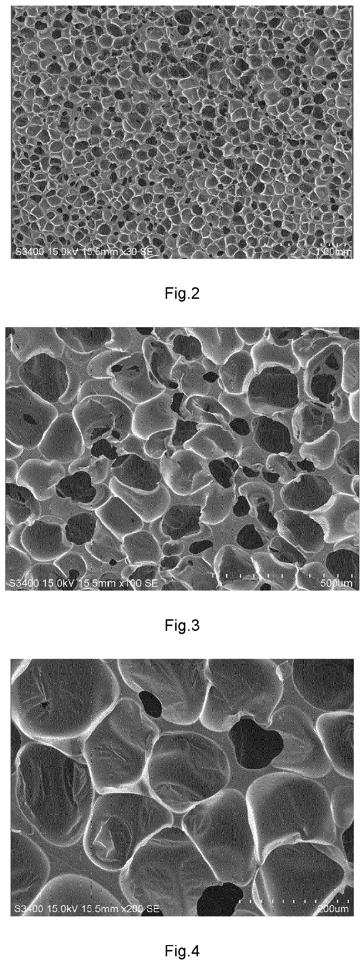

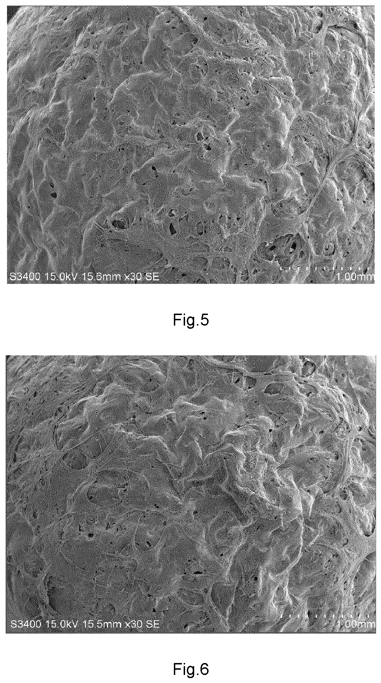

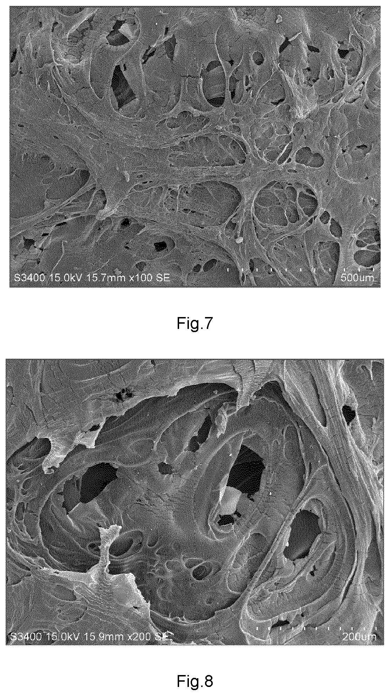

FIGS. 2-4 are SEM pictures in different scales of the interior of the polymer elastomer material with micro air holes prepared in embodiment 1, and from the FIGS., it can be seen that the particle material has an obvious coiled, network-like and cross-linking air channel structure which is formed by micro air holes and open bubble holes. FIGS. 5-8 are SEM pictures in different scales of the surface of the polymer elastomer material with micro air holes prepared in embodiment 1, and from the FIGS., it can be seen that the air channels extend to the surfaces of the particle material.

### Embodiment 2

According to the process flow as shown in FIG. 1, a thermoplastic polymer elastomer material with micro air holes of the disclosure was prepared based on the following raw material formula and process conditions:
In this embodiment, the raw materials added in percentage by weight included: 60% of polyether type thermoplastic polyurethane with a molecular weight Mw in a range of 300K to 500K (K means the unit "thousand" here, the same below), 35% of polyether type thermoplastic polyurethane with a molecular weight Mw in a range of 150K to 250K, 4.95% of foaming agent which was N₂ and 0.05% of nucleator which was carbon black. The length-diameter ratio L/D of the double-screw extruder was 56; the heating temperature of the screws was in a range of 160 to 220°C; the temperature of the static mixer was in a range of 140-180°C; the inlet pressure of the melt pump was in a range of 100 to 150 bar; the process water pressure was about 6 bar; and the differential pressure during pressure release (namely the differential pressure between the high-pressure hot melt at the exit of the mold head and the process water in the underwater granulation chamber) was controlled to be in a range of 90 to 140 bar. In the multi-stage pressure-release expansion process water pipeline, the water pressure was controlled to be about 6 bar in the first-stage process water pipe, about 5 bar in the second-stage process water pipe, about 3 bar in the third-stage process water pipe, and about 1 bar in the fourth-stage process water pipe.

Finally, the thermoplastic polymer elastomer material with micro air holes obtained using the vibrating screen had a particle size in a range of about 8 to 12mm. In the material, the formed micro air hole structure accounted for about 30-50% and the open bubble hole structure accounted for about 40-60% by volume.

### Embodiment 3

According to the process flow as shown in FIG. 1, a thermoplastic polymer elastomer material with micro air holes of the disclosure was prepared based on the following raw material formula and process conditions:
In this embodiment, the raw materials added in percentage by weight included: 97% of polyether type thermoplastic polyurethane with a molecular weight Mw in a range of 80K to 120K (K indicates the unit "thousand" here, the same below), 0.1% of polyether type thermoplastic polyurethane with a molecular weight Mw in a range of 20K to 50K, 2.4% of foaming agent which was N₂, and 0.5% of nucleator which was the mixture of talcum powder and modified calcium carbonate in a mass ratio of 1:1. The length-diameter ratio L/D of the double-screw extruder was 46; the heating temperature of the screws was in a range of 160 to 220°C; the temperature of the static mixer was in a range of 130-170°C; the inlet pressure of the melt pump was in a range of 120 to 180 bar; the process water pressure was about 15 bar; and the pressure difference of pressure release (namely the differential pressure between the high-pressure hot melt at the exit of the mold head and the process water in the underwater granulation chamber) was controlled to be in a range of 120 to 150 bar. In the multi-stage pressure-release expansion process water pipeline, the water pressure was controlled to be about 15 bar in the first-stage process water pipe, about 10 bar in the second-stage process water pipe, about 6 bar in the third-stage process water pipe, and about 4 bar in the fourth-stage process water pipe.

Finally, the thermoplastic polymer elastomer material with micro air holes obtained using the vibrating screen had a particle size of about 0.6-2mm. In the material, the formed micro air hole structure accounted for about 30-45% and the open bubble hole structure accounted for about 0.5-10% by volume.

### Embodiment 4

According to the process flow as shown in FIG. 1, a thermoplastic polymer elastomer material with micro air holes of the disclosure was prepared based on the following raw material formula and process conditions:
In this embodiment, the raw materials added in percentage by weight included: 0.1% of polyether type thermoplastic polyurethane with a molecular weight Mw in a range of 300K to 500K (K means the unit "thousand" here, the same below), 97% of polyether type thermoplastic polyurethane with a molecular weight Mw in a range of 20K to 50K, 2.8% of foaming agent which was N₂, and 0.1% of nucleator which was carbon nano-tube. The length-diameter ratio L/D of the double-screw extruder was 48; the heating temperature of the screws was in a range of 160 to 220°C; the temperature of the static mixer was in a range of 130-180°C; the inlet pressure of the melt pump was in a range of 90 to 120 bar; the process water pressure was about 10 bar; and the pressure difference of pressure release (namely the differential pressure between the high-pressure hot melt at the exit of the mold head and the process water in the underwater granulation chamber) was controlled to be in a range of 80 to 120 bar. In the multi-stage pressure-release expansion process water pipeline, the water pressure was controlled to be about 10 bar in the first-stage process water pipe, about 7 bar in the second-stage process water pipe, about 4 bar in the third-stage process water pipe, and about 2 bar in the fourth-stage process water pipe.

Finally, the thermoplastic polymer elastomer material with micro air holes obtained using the vibrating screen had a particle size in a range of about 12 to 25mm. In the material, the formed micro air hole structure accounted for about 20% and the open bubble hole structure accounted for about 60-70% by volume.

### Embodiment 5

According to the process flow as shown in FIG. 1, a thermoplastic polymer elastomer material with micro air holes of the disclosure was prepared based on the following raw material formula and process conditions:
In this embodiment, the raw materials added in percentage by weight included: 70% of polyether type thermoplastic polyurethane with a molecular weight Mw in a range of 120K to 180K (K indicates the unit "thousand" here, the same below), 19.7% of polyether type thermoplastic polyurethane with a molecular weight Mw in a range of 20K to 50K, 10% of foaming agent which was the mixture of CO₂ and N₂ in a volume ratio of 1:1, and 0.3% of nucleator which was the mixture of calcium carbonate and tetrafluoroethylene powder in a mass ratio of 1:1. The length-diameter ratio L/D of the double-screw extruder was 40; the heating temperature of the screws was in a range of 180 to 240°C; the temperature of the static mixer was in a range of 140-190°C; the inlet pressure of the melt pump was in a range of 100 to 120 bar; the process water pressure was about 10 bar; and the differential pressure during pressure release (namely the differential pressure between the high-pressure hot melt at the exit of the mold head and the process water in the underwater granulation chamber) was controlled to be in a range of 90 to 120 bar. In the multi-stage pressure-release expansion process water pipeline, the water pressure was controlled to be about 10 bar in the first-stage process water pipe, about 7 bar in the second-stage process water pipe, about 4 bar in the third-stage process water pipe, and about 2 bar in the fourth-stage process water pipe.

Finally, the thermoplastic polymer elastomer material with micro air holes obtained using the vibrating screen had a particle size in a range of about 3 to 6mm. In the material, the formed micro air hole structure accounted for about 60% and the open bubble hole structure accounted for about 10% by volume.

### Embodiment 6

Compared with embodiment 1, all were identical, except the raw material formula replaced by the following ingredients in percentage by weight:80% of polyester type thermoplastic polyurethane with a molecular weight Mw in a range of 200K to 300K (K indicates the unit "thousand" here, the same below), 18.9% of polyester type thermoplastic polyurethane with a molecular weight Mw in a range of 50K to 100K, 1% of foaming agent which was the mixture of CO₂ and N₂ in a volume ratio of 1:1, and 0.1% of nucleator which was the mixture of calcium carbonate and tetrafluoroethylene powder in a mass ratio of 1:1.

Finally, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8. In the material, the formed micro air hole structure accounted for about 70-80% and the open bubble hole structure accounted for about 15-30% by volume.

### Embodiment 7

Compared with embodiment 1, all were identical, except the raw material formula replaced by the following ingredients in percentage by weight:
80% of polyester type thermoplastic polyurethane with 80A shore hardness, 19.5% of polyester type thermoplastic polyurethane with 30A shore hardness, 0.4% of the foaming agent which was the mixture of CO₂ and N₂ in weight ratio of 1:1, and 0.1 % of nucleator which was the mixture of carbon nano-tube, talcum powder and calcium carbonate.

Finally, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8. In the material, the formed micro air hole structure accounted for about 70-80% and the open bubble hole structure accounted for about 15-30% by volume.

### Embodiment 8

Compared with embodiment 7, all were identical, except the raw material formula replaced by the following ingredients in percentage by weight:
70% of polyester type thermoplastic polyurethane with 75D shore hardness, 27.5% of polyester type thermoplastic polyurethane with 85A shore hardness, 2% of the foaming agent which was the mixture of CO₂ and N₂ in weight ratio of 1:1, and 0.5% of nucleator which was the mixture of carbon nano-tube, talcum powder and calcium carbonate.

Finally, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8. In the material, the formed micro air hole structure accounted for about 60-70% and the open bubble hole structure accounted for about 25-40% by volume.

### Embodiment 9

Compared with embodiment 7, all were identical, except the high-hardness polyester type thermoplastic polyurethane with 90A shore hardness and low-hardness polyester type thermoplastic polyurethane with 50A shore hardness as replacements in the raw material formula.

Finally, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8. In the material, the formed micro air hole structure accounted for about 70-80% and the open bubble hole structure accounted for about 15-30% by volume.

### Embodiment 10

According to the process flow as shown in FIG. 1, a thermoplastic polymer elastomer material with micro air holes of the disclosure was prepared based on the following raw material formula and process conditions:
In this embodiment, the raw materials added in percentage by weight included: 60% of modified low-melting-point PET, 37% of polyester type polyurethane (the difference between the melting points of the modified low-melting point PET and the polyester type polyurethane was 20°C), 0.5% of nucleator which was carbon black, and 2.5% of foaming agent which was the mixture of CO₂ and N₂.

The length-diameter ratio L/D of the double-screw extruder was 52; the heating temperature of the screws was in a range of 220 to 280°C; the temperature of the static mixer was in a range of 160-200°C; the inlet pressure of the melt pump was in a range of 100 to 150 bar; the process water pressure was about 15 bar; and the differential pressure during pressure release (namely the differential pressure between the high-pressure hot melt at the exit of the mold head and the process water in the underwater granulation chamber) was controlled to be in a range of 130 to 180 bar. In the multi-stage pressure-release expansion process water pipeline, the water pressure was controlled to be about 15 bar in the first-stage process water pipe, about 12 bar in the second-stage process water pipe, about 8 bar in the third-stage process water pipe, and about 4 bar in the fourth-stage process water pipe.

Finally, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8. In the material, the formed micro air hole structure accounted for about 50-80% and the open bubble hole structure accounted for about 5-50% by volume.

### Embodiment 11

Compared with embodiment 10, all were identical, except the modified low-melting-point polyamide (PA) which replaced the modified low-melting-point PET.

Finally, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8. In the material, the formed micro air hole structure accounted for about 50-80% and the open bubble hole structure accounted for about 5-50% by volume.

### Embodiment 12

Compared with embodiment 10, all were identical, except the PBT which replaced the modified low-melting-point PET.

Finally, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8. In the material, the formed micro air hole structure accounted for about 50-80% and the open bubble hole structure accounted for about 5-50% by volume.

### Embodiment 13-15

Compared with embodiment1, all were identical, except the n-butane, n-pentane and iso-pentane, which respectively served as the foaming agent.

In embodiment 13-15, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8.

### Embodiment 16

Compared with embodiment 1, all were identical in this embodiment, except the procedure of directly bringing out the particles in the underwater granulation chamber by the process water at a basically stable pressure in a range 40 to 50°C of and under a basically stable pressure in a range of 4 to 8 bar, and the procedures of pressure release, cooling and molding.

Finally, the thermoplastic polymer elastomer material with micro air holes obtained using the vibrating screen also had a compound bubble hole structure formed by micro air holes (closed holes) and open bubble holes. Refer to the bubble hole structure as shown in FIG. 2-8. However, compared with the foam particles in embodiment 1, some of the foam particles in this embodiment had breaking bubble holes.

### Embodiment 17

Compared with embodiment 1, a conventional reactor foaming process at a foaming temperature of about 150°C and under a pressure of about 15Mpa was adopted in this embodiment.

Finally, the prepared foam particles also had the compound bubble hole structure formed by micro air holes (closed hole) and open bubble holes, like the foam particles as shown in FIG. 1-8, but the bubble holes were relatively unstable and tend to collapse.

### Comparison example 1

Compared with embodiment 1, all were identical in this example, except that all the polymer raw material was polyether type thermoplastic polyurethane with a molecular weight in a range of 150K to 300K.

### Comparison example 2

Compared with embodiment 7, all were identical in this example, except that all the polymer raw material was polyester type thermoplastic polyurethane with 80A shore hardness.

### Comparison example 3

Compared with embodiment 10, all were identical in this example, except that all the polymer raw material was modified low-melting-point PET (which means that no polyester type polyurethane was added).

Finally, the foaming materials prepared in comparison examples 1-3 were tested to analyze the bubble holes thereof. Results showed that all foaming materials obtained in the three comparison examples were foam particles with continuous surfaces, and the inner scanning pictures of the cut particles showed that all bubble holes were closed holes, without the open holes which extended to the surfaces, like the foam particles obtained in embodiment 1 as shown in FIG. 5-8. Besides, the foaming factor was obviously smaller than that of the formula which contains two kinds of mixed polymer raw materials.

From the above embodiment and comparison examples it can be known that, in comparison with the comparison examples which used a single polymer as the raw material to prepare foam particles with pure closed holes, the disclosure, through improving the formula of the foam particles, adopts two kinds of polymers of different physical conditions as the raw materials to prepare the foam particles with a compound bubble hole structure which is formed by open and closed holes, in conjunction with the principle that the foaming agent has different foaming capabilities in two kinds of polymers during the foaming process.

## Claims

1. A thermoplastic polymer elastomer material with micro air holes, comprising the following ingredients in percentage by weight: 0.1-97% of support polymer material, 0.1-97% of pressure-resistant slow-rebound polymer material, 0.01-0.5% of nucleator and 0.1-10% of foaming agent;
wherein the support polymer material is a polymer material with a high molecular weight, high hardness, high crystallization or high polarity, and the pressure-resistant slow-rebound polymer material is a polymer material with a low molecular weight, low hardness, crystallization as low as to amorphous state and polarity as low as to no polarity, corresponding to the support polymer material;
wherein the support polymer material is macromolecular weight thermoplastic polyurethane, and the corresponding pressure-resistant slow-rebound polymer material is low-molecular weight thermoplastic polyurethane;
or the support polymer material is high-hardness thermoplastic polymer elastomer, and the corresponding pressure-resistant slow-rebound polymer material is low-hardness thermoplastic polymer elastomer;
or the support polymer material is polyamide or polyester, and the corresponding pressure-resistant slow-rebound polymer material is thermoplastic polyurethane;
**characterized in that** the molecular weight Mw of the macromolecular weight thermoplastic polyurethane is 8×10⁴∼5×10⁵, and the molecular weight Mw of the low-molecular weight thermoplastic polyurethane is 8×10⁴∼5×10⁵;
the shore hardness of the high-hardness thermoplastic polymer elastomer is in a range of 80A to 75D, and the shore hardness of the low-hardness thermoplastic polymer elastomer is in a range of 30 to 85A;
the polyester or polyamide is modified low-melting-point polyester or modified low-melting-point polyamide, and the difference between the melting points of the support polymer material and the pressure-resistant rebound polymer material is controlled to be within 20°C.

2. The thermoplastic polymer elastomer material with micro air holes according to claim 1, wherein the nucleator is selected from at least any one of carbon nano-tube, silicon dioxide, talcum powder, modified calcium carbonate, carbon black and tetrafluoroethylene powder;
and the foaming agent is selected from at least any one of CO₂, N₂, normal butane, n-pentane and isopentane.

3. The thermoplastic polymer elastomer material with micro air holes according to claim 1, wherein the polymer elastomer material is uniform spherical particles with a particle size in a range of 0.6 to 25 mm.

4. A method for preparing the thermoplastic polymer elastomer material with micro air holes according to any one of claims 1-3, comprising the following steps:
(i) feeding the support polymer material, the pressure-resistant slow-rebound polymer material and the nucleator into a double-screw extruder (2) via a feeding port (3) at the front end, feeding the foaming agent into the double-screw extruder via a feeding port (4) in the middle section, melting and well mixing all raw materials, sending the mixed materials into a static mixer (5) for further homogenization to obtain a hot melt, and delivering the hot melt by a melt pump (6) under a controlled pressure and at a fixed amount;
(ii) guiding the hot melt that is delivered by the melt pump to pass a mold head (7) and enter an underwater granulation chamber (8) to obtain particles, delivering and separating the particles by process water, screening and drying the particles to obtain the target product.

5. The method for preparing the thermoplastic polymer elastomer material with micro air holes according to claim 4, wherein in step (i), the temperature of the double-screw extruder is in a range of 160 to 300°C; the length-diameter ratio of the double-screw extruder is 32-56;
the temperature in the static mixer is set to be in a range of 120 to 280°C; the inlet pressure of the melt pump is in a range of 50 to 200 bar; and the difference between the pressure of the hot melt extruded via the mold head and the pressure of the process water in the underwater granulation chamber is controlled to be in a range of 70 to 120 bar.

6. The method for preparing the thermoplastic polymer elastomer material with micro air holes according to claim 4, wherein in step (ii), the process water in the underwater granulation chamber is at a temperature in a range of 10 to 90°C and under a pressure in a range of 4 to15 bar;
the particles are brought out of the underwater granulation chamber and delivered by the process water via a multi-stage pressure-release expansion process water pipeline of which the pressure gradually drops.

7. The method for preparing the thermoplastic polymer elastomer material with micro air holes according to claim 6, wherein in step (ii), the multi-stage pressure-release expansion process water pipeline is a multi-stage process water pipeline, wherein the water pressure of a first-stage process water pipe (10) keeps consistent with the process water pressure in the underwater granulation chamber.

## Patentansprüche

1. Thermoplastisches Polymer-Elastomer-Material mit Mikroluftlöchern, umfassend die folgenden Bestandteile in Gewichtsprozent: 0,1 bis 97 % Trägerpolymermaterial, 0,1 bis 97 % druckbeständiges Polymermaterial mit langsamem Rückprall, 0,01 bis 0,5 % Keimbildner und 0,1 bis 10 % Treibmittel;
wobei das Trägerpolymermaterial ein Polymermaterial mit hohem Molekulargewicht, hoher Härte, hoher Kristallisation oder hoher Polarität ist und das druckbeständige Polymermaterial mit langsamem Rückprall ein Polymermaterial mit niedrigem Molekulargewicht, geringer Härte, einer Kristallisation, die von gering bis zum amorphen Zustand reicht, und einer Polarität, die von gering bis zu gar keiner Polarität reicht, entsprechend dem Trägerpolymermaterial;
wobei das Trägerpolymermaterial ein thermoplastisches Polyurethan mit makromolekularem Gewicht ist und das entsprechende druckbeständige Polymermaterial mit langsamem Rückprall ein thermoplastisches Polyurethan mit niedrigem Molekulargewicht ist;
oder das Trägerpolymermaterial ein thermoplastisches Polymer-Elastomer mit hoher Härte ist und das entsprechende druckbeständige Polymermaterial mit langsamem Rückprall ein thermoplastisches Polymer-Elastomer mit niedriger Härte ist;
oder das Trägerpolymermaterial Polyamid oder Polyester ist und das entsprechende druckbeständige Polymermaterial mit langsamem Rückprall thermoplastisches Polyurethan ist;
**dadurch gekennzeichnet, dass**
das Molekulargewicht Mw des thermoplastischen Polyurethans mit makromolekularem Gewicht 8×10⁴∼5×10⁵ beträgt und das Molekulargewicht Mw des thermoplastischen Polyurethans mit niedrigem Molekulargewicht 8×10⁴∼5×10⁵ beträgt;
die Shore-Härte des thermoplastischen Polymer-Elastomers mit hoher Härte im Bereich von 80A bis 75D liegt und die Shore-Härte des thermoplastischen Polymer-Elastomers mit niedriger Härte in einem Bereich von 30 bis 85A liegt;
der Polyester oder das Polyamid ein modifizierter niedrigschmelzender Polyester oder ein modifiziertes niedrigschmelzendes Polyamid ist und die Differenz zwischen den Schmelzpunkten des Trägerpolymermaterials und des druckbeständigen Polymermaterials mit Rückprall so geregelt wird, dass sie innerhalb von 20°C liegt.

2. Thermoplastisches Polymer-Elastomer-Material mit Mikroluftlöchern nach Anspruch 1, wobei der Keimbildner ausgewählt ist aus mindestens einem von Kohlenstoffnanoröhrchen, Siliciumdioxid, Talkumpulver, modifiziertem Calciumcarbonat, Ruß und Tetrafluorethylenpulver;
und das Schäumungsmittel ausgewählt ist aus mindestens einem von CO₂, N₂, Normalbutan, n-Pentan und Isopentan.

3. Thermoplastisches Polymer-Elastomer-Material mit Mikroluftlöchern nach Anspruch 1, wobei das Polymer-Elastomer-Material gleichförmige kugelförmige Teilchen mit einer Teilchengröße im Bereich von 0,6 bis 25 mm ist.

4. Verfahren zur Herstellung des thermoplastischen Polymer-Elastomer-Materials mit Mikroluftlöchern nach einem der Ansprüche 1 bis 3, umfassend die folgenden Schritte:
(i) Zuführen des Trägerpolymermaterials, des druckbeständigen, Polymermaterials mit langsamem Rückprall und des Keimbildners in einen Doppelschneckenextruder (2) über eine Zuführöffnung (3) am vorderen Ende, Zuführen des Treibmittels in den Doppelschneckenextruder über eine Einfüllöffnung (4) im mittleren Abschnitt, Schmelzen und gutes Mischen aller Rohstoffe, Senden der gemischten Materialien in einen statischen Mischer (5) zur weiteren Homogenisierung, um einen Schmelzklebstoff zu erhalten, und Abgeben des Schmelzklebstoffs durch eine Schmelzpumpe (6) unter geregeltem Druck und in einer festen Menge;
(ii) Leiten des von der Schmelzepumpe abgegebenen Schmelzklebstoffs, um einen Formkopf (7) zu passieren und in eine Unterwasser-Granulationskammer (8) einzutreten, um Teilchen zu erhalten, Abgeben und Trennen der Teilchen durch Prozesswasser, Sieben und Trocknen der Teilchen, um das Zielprodukt zu erhalten.

5. Verfahren zur Herstellung des thermoplastischen Polymer-Elastomer-Materials mit Mikroluftlöchern nach Anspruch 4, wobei in Schritt (i) die Temperatur des Doppelschneckenextruders in einem Bereich von 160 bis 300 °C liegt; das Längen-Durchmesser-Verhältnis des Doppelschneckenextruders 32 bis 56 beträgt;
die Temperatur im statischen Mischer auf einen Bereich von 120 bis 280 °C eingestellt wird; der Einlassdruck der Schmelzpumpe im Bereich von 50 bis 200 bar liegt; und die Differenz zwischen dem Druck der über den Formkopf extrudierten Heißschmelze und dem Druck des Prozesswassers in der Unterwasser-Granulationskammer auf einen Bereich von 70 bis 120 bar geregelt wird.

6. Verfahren zur Herstellung des thermoplastischen Polymer-Elastomer-Materials mit Mikroluftlöchern nach Anspruch 4, wobei in Schritt (ii) das Prozesswasser in der Unterwasser-Granulationskammer bei einer Temperatur im Bereich von 10 bis 90 °C und unter einem Druck im Bereich von 4 bis 15 bar liegt;
die Teilchen aus der Unterwasser-Granulationskammer ausgetragen und vom Prozesswasser über eine mehrstufige Druckentlastungs-Entspannungs-Prozesswasserleitung abgegeben werden, deren Druck allmählich abfällt.

7. Verfahren zur Herstellung des thermoplastischen Polymer-Elastomer-Materials mit Mikroluftlöchern nach Anspruch 6, wobei in Schritt (ii) die mehrstufige Druckentlastungs-Expansions-Prozesswasserleitung eine mehrstufige Prozesswasserleitung ist, wobei der Wasserdruck von eine Prozesswasserleitung (10) der ersten Stufe mit dem Prozesswasserdruck in der Unterwasser-Granulationskammer konsistent gehalten wird.

## Revendications

1. Matériau élastomère polymère thermoplastique avec micro-trous d'air, comprenant les ingrédients suivants en pourcentage en poids : de 0,1 à 97 % de matériau polymère de support, de 0,1 à 97 % de matériau polymère à rebond lent résistant à la pression, de 0,01 à 0,5 % de nucléateur et de 0,1 à 10 % d'agent moussant ;
dans lequel le matériau polymère de support est un matériau polymère ayant un poids moléculaire élevé, une dureté élevée, une cristallisation élevée ou une polarité élevée, et le matériau polymère à rebond lent résistant à la pression est un matériau polymère ayant un faible poids moléculaire, une faible dureté, une cristallisation aussi faible qu'atteignant l'état amorphe et une polarité aussi faible qu'atteignant aucune polarité, correspondant au matériau polymère de support ;
dans lequel le matériau polymère de support est un polyuréthane thermoplastique de poids macromoléculaire et le matériau polymère à rebond lent résistant à la pression correspondant est un polyuréthane thermoplastique de faible poids moléculaire ;
ou le matériau polymère de support est un élastomère polymère thermoplastique de dureté élevée et le matériau polymère à rebond lent résistant à la pression correspondant est un élastomère polymère thermoplastique de faible dureté ;
ou le matériau polymère de support est un polyamide ou un polyester et le matériau polymère à rebond lent résistant à la pression correspondant est un polyuréthane thermoplastique ;
**caractérisé en ce que**
le poids moléculaire Mp du polyuréthane thermoplastique de poids macromoléculaire est de 8×10⁴ à environ 5×10⁵ et le poids moléculaire Mp du polyuréthane thermoplastique de faible poids moléculaire est de 2×10⁴ à environ 2,5×10⁵ ;
la dureté Shore de l'élastomère polymère thermoplastique de dureté élevée est comprise dans la plage allant de 80A à 75D et la dureté Shore de l'élastomère polymère thermoplastique de faible dureté est comprise dans la plage allant de 30 à 85A ;
le polyester ou le polyamide est un polyester modifié de faible point de fusion ou un polyamide modifié de faible point de fusion modifié, et la différence entre les points de fusion du matériau polymère de support et du matériau polymère à rebond résistant à la pression est régulée pour être dans les 20 °C.

2. Matériau élastomère polymère thermoplastique avec des micro-trous d'air selon la revendication 1, dans lequel le nucléateur est sélectionné parmi au moins l'un quelconque des nanotubes de carbone, dioxyde de silicium, poudre de talc, carbonate de calcium modifié, noir de carbone et poudre de tétrafluoroéthylène ;
et l'agent moussant est sélectionné parmi au moins l'un quelconque des CO₂, N₂, butane normal, n-pentane et isopentane.

3. Matériau élastomère polymère thermoplastique avec des micro-trous d'air selon la revendication 1, dans lequel le matériau élastomère polymère est des particules sphériques uniformes ayant une taille de particule comprise dans la plage de 0,6 à 25 mm.

4. Procédé de préparation du matériau élastomère polymère thermoplastique avec des micro-trous d'air selon l'une quelconque des revendications 1 à 3, comprenant les étapes suivantes consistant à :
(i) alimenter le matériau polymère de support, le matériau polymère à rebond lent résistant à la pression et le nucléateur dans une extrudeuse à double vis (2) par le biais d'un orifice d'alimentation (3) au niveau de l'extrémité avant, alimenter l'agent moussant dans l'extrudeuse à double vis par le biais d'un orifice d'alimentation (4) dans la section centrale, faire fondre et bien mélanger toutes les matières premières, envoyer les matières mélangées dans un mélangeur statique (5) pour une homogénéisation supplémentaire afin d'obtenir une matière thermofusible et délivrer la matière thermofusible par une pompe à fusion (6) sous une pression régulée et à une quantité fixe ;
(ii) guider la matière thermofusible qui est délivrée par la pompe à fusion pour passer une tête de moule (7) et entrer dans une chambre de granulation subaquatique (8) afin d'obtenir des particules, délivrer et séparer les particules par l'eau de traitement, tamiser et sécher les particules pour obtenir le produit cible.

5. Procédé de préparation du matériau élastomère polymère thermoplastique avec des micro-trous d'air selon la revendication 4, dans lequel à l'étape (i), la température de l'extrudeuse à double vis est comprise dans la plage allant de 160 à 300 °C ; le rapport longueur-diamètre de l'extrudeuse à double vis est compris dans la plage allant de 32 à 56 ;
la température dans le mélangeur statique est réglée pour être comprise dans la plage allant de 120 à 280 °C ; la pression d'entrée de la pompe à fusion est comprise dans la plage allant de 50 à 200 bars ; et la différence entre la pression de la matière thermofusible extrudée par le biais de la tête de moule et la pression de l'eau de traitement dans la chambre de granulation subaquatique est régulée pour être comprise dans la plage allant de 70 à 120 bars.

6. Procédé de préparation du matériau élastomère polymère thermoplastique avec des micro-trous d'air selon la revendication 4, dans lequel à l'étape (ii), l'eau de traitement dans la chambre de granulation subaquatique est à une température comprise dans la plage allant de 10 et 90 °C et sous une pression comprise dans la plage allant de 4 à 15 bars ;
les particules sont extraites de la chambre de granulation subaquatique et délivrées par l'eau de traitement par le biais d'une conduite d'eau de traitement d'expansion par libération de pression à plusieurs étages dont la pression chute progressivement.

7. Procédé de préparation du matériau élastomère polymère thermoplastique avec des micro-trous d'air selon la revendication 6, dans lequel à l'étape (ii), la conduite d'eau de traitement d'expansion par libération de pression à plusieurs étages est une conduite d'eau de traitement à plusieurs étages, dans lequel la pression d'eau d'une conduite d'eau de traitement de premier étage (10) reste cohérente avec la pression de l'eau de traitement dans la chambre de granulation subaquatique.
